# EUROPÄISCHE PATENTSCHRIFT

(11) **EP 3 212 584 B1**
(45) Veröffentlichungstag und Bekanntmachung des Hinweises auf die Patenterteilung: **26.12.2018**
(21) Anmeldenummer: 15766766.8
(22) Anmeldetag: 08.09.2015
(51) Int. Cl.: C03B 23/025, C03B 23/03, C03B 23/035, C03B 35/14

(54) **BIEGEWERKZEUG FÜR GLASSCHEIBEN**
BENDING TOOL FOR GLASS PANES
OUTIL DE PLIAGE POUR VITRES

(30) Priorität: 28.10.2014 EP 14190618
(43) Veröffentlichungstag der Anmeldung: 06.09.2017
(73) Patentinhaber: Saint-Gobain Glass France, 92400 Courbevoie (FR)
(72) Erfinder: BALDUIN, Michael, 52477 Alsdorf (DE); LE NY, Jean-Marie, B-4851 Gemmenich (BE); PHAN, Dang, Cuong, 52062 Aachen (DE); PALMANTIER, Arthur, 52064 Aachen (DE); DUNKMANN, Benno, B-4700 Eupen (BE)
(74) Vertreter: Feist, Florian Arno
(86) Internationale Anmeldenummer: PCT/EP2015/070432
(87) Internationale Veröffentlichungsnummer: WO 2016/066310

(56) Entgegenhaltungen:
- EP-A1- 0 613 865
- EP-A2- 0 706 978
- KR-B1- 101 343 631
- US-A- 3 778 244
- US-A- 4 511 386
- US-B1- 6 318 125

## Beschreibung

Die Erfindung betrifft ein Biegewerkzeug für Glasscheiben, eine Verfahren zum Biegen von Glasscheiben und die Verwendung des Biegewerkzeugs.

Im Fahrzeugbereich sind gebogene Verbundgläser üblich, insbesondere als Windschutzscheiben. Es ist bekannt, dass es vorteilhaft ist, die Einzelscheiben des Verbundglases gemeinsam simultan zu biegen. Paarweise gebogene Glasscheiben sind hinsichtlich ihrer Biegung aufeinander abgestimmt und eignen sich daher in besonderem Maße, miteinander zum Verbundglas laminiert zu werden. Ein Verfahren zum paarweisen Biegen von Glasscheiben ist beispielsweise aus DE 101 05 200 A1 bekannt.

Aus WO 2006/072721 A1, WO 2012/080071 A1 und WO 2012/080072 A1 ist ein Werkzeug bekannt, welches als obere Form in Biegeverfahren eingesetzt werden kann. Das Werkzeug umfasst eine rahmenartige, konvexe Kontaktfläche und eine Abdeckung mit einem peripheren Luftleitblech. Durch eine Saugwirkung entlang der Scheibenkanten wird die zu biegende Glasscheibe entgegen der Wirkung der Schwerkraft an die Kontaktfläche angepresst und dadurch sicher am Werkzeug gehalten. Auch zwei aufeinander liegende Glasscheiben können simultan im Werkzeug gehalten werden. Das Werkzeug kann verwendet werden, um die Glasscheiben zwischen verschiedenen Positionen der Biegevorrichtung zu transportieren, beispielsweise um die Glasscheiben von einer Biegeform zu übernehmen und an eine andere zu übergeben. Das Werkzeug kann auch für einen Pressbiegeschritt verwendet werden, wobei die Glasscheiben zwischen dem Werkzeug und einer komplementären Gegenform unter Einwirkung von Druck- und/oder Saugwirkung geformt wird.

US 3,778,244 A offenbart ein oberes Biegewerkzeug mit einer konkaven oder konvexen vollflächigen Kontaktfläche (Vollform) und eine Abdeckung mit einem peripheren Luftleitblech. Durch das Luftleitblech kann die Kante der zu biegenden Glasscheibe mit einem Luftstrom bestrichen werden, so dass die Glasscheibe an die Kontaktfläche angedrückt wird, um sie zu biegen. Zusätzlich kann die Glasscheibe durch Öffnungen in der vollflächigen Kontaktfläche an diese angesaugt werden.

Moderne Fahrzeugverglasungen weisen immer komplexere Formen auf mit bereichsweise sehr ausgeprägten Krümmungsradien. Insbesondere die Ecken moderner Scheiben sollen häufig eine sehr starke Krümmung aufweisen. Starke Biegungen im Kanten- oder Eckenbereich bringen aber die Gefahr von Biegefehlern in der Scheibenmitte mit sich, wie eine unerwünschte Überbiegung oder die Erzeugung von Unebenheiten. Es besteht daher ein Bedarf an neuen Biegewerkzeugen, mit denen die komplexen Scheibengeometrien in hoher Qualität und verfahrenstechnisch sinnvoll erzeugt werden können.

Der vorliegenden Erfindung liegt die Aufgabe zugrunde, ein verbessertes Biegewerkzeug bereitzustellen, mit dem starke lokale Scheibenbiegungen erzeugt werden können, ohne dass es zu Biegefehlern an anderen Stellen kommt. Das Biegewerkzeug soll insbesondere auch in der Lage sein, zwei Glasscheiben paarweise simultan zu biegen. Der Erfindung liegt außerdem die Aufgabe zu Grunde, ein verbessertes Verfahren zum Biegen von Glasscheiben bereitzustellen.

Die Aufgabe der Erfindung wird erfindungsgemäß durch ein Biegewerkzeug gemäß Anspruch 1 gelöst. Bevorzugte Ausführungen gehen aus den Unteransprüchen hervor.

Das erfindungsgemäße Biegewerkzeug zum Biegen mindestens einer Glasscheibe durch eine Saugwirkung umfasst eine rahmenartige, konvexe Kontaktfläche und eine Abdeckung mit einem peripheren, die Kontaktfläche zumindest bereichsweise umgebende Luftleitblech, wobei das Biegewerkzeug dazu geeignet ist,
- einen ersten, verminderten Druck p₁ (Haltedruck) zu erzeugen in einem ersten Druckbereich zwischen dem Luftleitblech und der Kontaktfläche;
- einen zweiten, verminderten Druck p₂ (Verformungsdruck) zu erzeugen in einem zweiten Druckbereich, wobei der zweite Druck p₂ kleiner ist als der erste Druck p₁;
- einen dritten Druck p₃ (Kompensationsdruck) zu erzeugen in einem dritten Druckbereich, wobei der dritte Druck p₃ größer ist als der erste Druck p₁.

Die hier angegebenen Drücke p₁, p₂ und p₃ werden insbesondere auf der dem Biegewerkzeug zugewandten Oberfläche der zu biegenden Glasscheibe erzeugt.

Wie nachstehend genauer ausgeführt wird, werden die Glasscheiben durch den ersten Druckbereich sicher am Biegewerkzeug gehalten. Durch den zweiten Druckbereich können starke lokale Biegungen erzeugt werden. Durch den dritten Druckbereich werden Biegefehler, wie Überbiegen, wirkungsvoll verhindert. Insgesamt gewährleistet das erfindungsgemäße Biegewerkzeug eine optimierte Druckverteilung, wodurch sich auf verfahrenstechnisch einfache Weise komplexere Scheibenformen realisieren lassen als mit herkömmlichen Werkzeugen. Das sind große Vorteile der vorliegenden Erfindungen.

Das erfindungsgemäße Biegewerkzeug gehört zur Gruppe der Biegewerkzeuge, mit denen mindestens eine Glasscheibe durch eine Saugwirkung gebogen wird. Es ist insbesondere kein Werkzeug zum Schwerkraftbiegen, bei dem eine Glasscheibe auf eine Biegeform abgelegt und auf Biegetemperatur erwärmt wird, so dass sich die Scheibenform infolge der Schwerkraft an die Biegeform anpasst. Das erfindungsgemäße Biegewerkzeug ermöglicht vielmehr die aktive Verformung der erwärmten Glasscheibe, indem eine durch einen Unterdruck erzeugt Saugwirkung auf die Glasscheibe ausgeübt und durch das Biegewerkzeug definiert verteilt wird, so dass sich die erwärmte und erweichte Glasscheibe infolge der Saugwirkung an die Form des Biegewerkzeugs anschmiegt. Das Biegewerkzeug kann auch als Saugbiegeform bezeichnet werden.

Das erfindungsgemäße Biegewerkzeug zum Biegen mindestens einer Glasscheibe durch eine Saugwirkung enthält eine rahmenartige Kontaktfläche. Es ist also kein sogenanntes vollflächiges Biegewerkzeug, bei dem die Glasscheibe ihre Form erhält, indem sie mit einer Formfläche vollflächig in Kontakt gebracht wird. Es gehört vielmehr zur Gruppe der Biegewerkzeuge, bei denen in peripherer Bereich der Glasscheibe an den Seitenkanten oder in der Nähe der Seitenkanten mit dem Werkzeug in direktem Kontakt steht, während der größte Teil der Scheibe keinen direkten Kontakt zum Biegewerkzeug hat. Ein solches Biegewerkzeug kann auch als Biegering oder Rahmenbiegeform bezeichnet werden. Der Begriff "rahmenartige Kontaktfläche" im Sinne der Erfindung dient lediglich zur Abgrenzung des erfindungsgemäßen Werkzeugs von einer vollflächigen Biegeform. Die Kontaktfläche muss keinen vollständigen Rahmen bilden, sondern kann auch unterbrochen sein. Die Kontaktfläche ist in Form eines vollständigen oder unterbrochenen Rahmens ausgebildet.

Die Breite der Kontaktfläche beträgt bevorzugt von 0,1 cm bis 10 cm, besonders bevorzugt von 0,2 cm bis 1 cm, beispielsweise 0,3 cm.

Das Biegewerkzeug ist weiter mit einem sogenannten Biegeskelett ausgestattet, worunter eine flächige Struktur verstanden ist, welche die Kontaktfläche trägt. Das Biegeskelett ist mit der Kontaktfläche ausgebildet. Die Kontaktfläche ist auf dem Biegeskelett angeordnet.

Das erfindungsgemäße Biegewerkzeug ist ein sogenanntes konvexes Biegewerkzeug. Das bedeutet, dass die Kontaktfläche konvex ausgebildet ist, so dass die Glasscheibe in eine konvexe Form gebogen wird. Unter einer konvexen Form wird dabei eine Form verstanden, bei der die Ecken und Ränder der Glasscheibe näher in Richtung des Biegewerkzeugs gebogen werden als die Scheibenmitte.

Das erfindungsgemäße Biegewerkzeug umfasst weiter eine Abdeckung. Die Abdeckung ist auf der Seite der Kontaktfläche angeordnet, welche während des Biegevorgangs von der Glasscheibe abgewandt ist. Die Abdeckung ermöglicht das Erzeugen der für den Biegevorgang wesentlichen Saugwirkung. Die Saugwirkung wird insbesondere durch Absaugen der Luft zwischen Abdeckung und Biegeskelett erzeugt.

Die Abdeckung ist mit einem peripheren, die Kontaktfläche zumindest bereichsweise umgebende Luftleitblech ausgebildet. Ein solches Luftleitblech wird häufig auch als Schürze bezeichnet. Das Luftleitblech ist bevorzugt am Ende der Abdeckung angeordnet. Das Luftleitblech umgibt oder umrahmt die Kontaktfläche vollständig oder abschnittsweise. Während des Biegevorgangs weist das Luftleitblech bevorzugt einen Abstand zu den Seitenkanten der Glasscheibe von 3 mm bis 50 mm auf, besonders bevorzugt von 5 mm bis 30 mm, beispielsweise 20 mm auf.

Das erfindungsgemäße Biegewerkzeug ist dazu geeignet, in mindestens einem ersten Druckbereich einen ersten, verminderten Druck p₁ zu erzeugen. Unter einem verminderten Druck wird im Sinne der Erfindung ein Druck verstanden, welcher geringer ist als der Umgebungsdruck. Bei einem verminderten Druck liegt also bezogen auf den Umgebungsdruck ein Unterdruck vor. Durch den verminderten Druck wird eine Saugwirkung erreicht. Der Bereich, in dem der erste Druck p₁ wirkt, wird im Sinne der Erfindung als erster Druckbereich bezeichnet. Der erste Druckbereich ist abschnittsweise zwischen dem Luftleitblech und der Kontaktfläche angeordnet. Der erste Druckbereich ist nicht notwendigerweise ein einziger, zusammenhängender Bereich. Der erste Druckbereich besteht typischerweise vielmehr aus mehreren voneinander getrennten Abschnitten mit gleichem Druck.

Der erste Druckbereich ist geeignet, die Kante der zu biegenden Glasscheibe zumindest abschnittsweise mit einem Luftstrom zu bestreichen und dadurch die Glasscheibe an die Kontaktfläche anzudrücken. Der durch den ersten Druck p₁ erzeugte Luftstrom wird durch das Luftleitblech so gelenkt, dass die Seitenkante der Glasscheibe zumindest abschnittsweise bestrichen wird. Durch den Luftstrom wird die Glasscheibe wirksam am Biegewerkzeug gehalten und an die Kontaktfläche angedrückt. Das Biegewerkzeug kann dadurch insbesondere als obere Biegeform verwendet werden, wobei die Glasscheibe durch den die Kante bestreichenden Luftstrom entgegen der Wirkung der Schwerkraft am Biegewerkzeug gehalten wird. Der erste Druck p₁ kann auch als Haltedruck bezeichnet werden.

Unter einer oberen Biegeform wird eine Form verstanden, welche die obere, vom Erdboden abgewandte Oberfläche der Glasscheibe kontaktiert. Unter einer unteren Biegeform wird eine Form verstanden, welche die untere, dem Erdboden zugewandte Oberfläche der Glasscheibe kontaktiert. Die Glasscheibe kann auf eine untere Form abgelegt werden.

Auch mehrere, beispielsweise zwei aufeinander liegende Glasscheiben können durch das erfindungsgemäße Biegewerkzeug simultan gehalten werden. Das Biegewerkzeug eignet sich daher besonders für Verfahren des paarweisen Biegens, bei denen zwei Einzelscheiben, die später zu einem Verbundglas laminiert werden sollen, gemeinsam, simultan kongruent gebogen werden.

Das erfindungsgemäße Biegewerkzeug ist weiter dazu geeignet, in mindestens einem zweiten Druckbereich einen zweiten, verminderten Druck p₂ zu erzeugen. Der zweite Druck p₂ ist erfindungsgemäß kleiner als der erste Druck p₁ (das heißt der Unterdruck ist im zweiten Druckbereich stärker als im ersten Druckbereich), so dass die durch den zweiten Druck p₂ erzeugte Saugwirkung stärker ist als die durch den Druck p₁ erzeugte Saugwirkung. Durch die Saugwirkung im zweiten Druckbereich wird die Glasscheibe lokal gebogen. Durch die geeignete Wahl des zweiten Drucks p₂ können auch starke lokale Biegungen erzeugt werden. Der zweite Druckbereich kann einen einzelnen oder auch mehrere Abschnitte aufweisen.

Die Form, in welche die Glasscheibe im zweiten Druckbereich gebogen wird, wird bevorzugt durch die Kontaktfläche festgelegt, an die sich die Glasscheibe infolge der Saugwirkung anschmiegt. Die rahmenförmige Kontaktfläche ist demnach gemäß der gewünschten Scheibenform ausgebildet, welche nach dem Biegen erreicht sein soll. Vor dem Biegen wird die Glasscheibe im ersten Druckbereich durch die Kontaktfläche kontaktiert und an dieser gehalten. Im zweiten Druckbereich besteht vor dem Biegen kein direkter Kontakt zwischen Glasscheibe und Kontaktfläche. Während des Biegeprozesses schmiegt sich die erweichte Glasscheibe im zweiten Druckbereich an die Kontaktfläche an, wodurch die gewünschte Form der Glasscheibe erreicht wird. Der zweite Druck p₂ kann auch als Verformungsdruck oder Biegedruck bezeichnet werden.

In einer typischen Anwendung sollen Ecken der Glasscheibe mit einer besonders ausgeprägten Biegung versehen werden. Beispielsweise kann es gewünscht sein, dass zwei benachbarte Ecken mit einer besonders ausgeprägten Biegung versehen werden, typischerweise die (in Einbaulage der Scheibe) oberen Ecken oder die (in Einbaulage der Scheibe) unteren Ecken. Es kann aber beispielsweise auch gewünscht sein, dass alle vier Ecken der Glasscheibe mit einer besonders ausgeprägten Biegung versehen werden. Der zweite Druckbereich weist bevorzugt mehrere Abschnitte auf, die im Bereich derjenigen Ecken der zu biegenden Scheibe angeordnet sind, die mit einer besonders starken Biegung versehen werden sollen. Der erste Druckbereich ist bevorzugt entlang der Seitenkanten der zu biegenden Scheibe zwischen den Abschnitten des zweiten Druckbereichs angeordnet.

Unter einer Ecke des Biegewerkzeugs wird im Sinne der Erfindung der Bereich des Biegewerkzeugs verstanden, welche dafür vorgesehen ist, mit einer Ecke der zu biegenden Glasscheibe in Kontakt gebracht zu werden. Ebenso ist unter einer Kante des Biegewerkzeugs der Bereich zu verstehen, der dafür vorgesehen ist, mit einer Kante der zu biegenden Scheibe in Kontakt gebracht zu werden.

In einer bevorzugten Ausgestaltung ist der zweite Druckbereich in zumindest einer Ecke des Biegewerkzeugs angeordnet ist und dazu geeignet, zumindest eine Ecke der Glasscheibe mit einer Biegung zu versehen, welche bevorzugt stärker ist als die Biegung der restlichen Glasscheibe.

In einer besonders bevorzugten Ausgestaltung umfasst der zweite Druckbereich zwei Abschnitte, wobei die beiden Abschnitte in zwei benachbarten Ecken des Biegewerkzeugs angeordnet sind. Die beiden Abschnitte sind dazu geeignet, zwei benachbarte Ecken der zu biegenden Glasscheibe mit einer Biegung zu versehen, welche bevorzugt stärker ist als die Biegung der restlichen Glasscheibe. Die beiden Ecken sind beispielweise die beiden oberen oder die beiden unteren Ecken der Glasscheibe. Der erste Druckbereich umfasst dabei bevorzugt ebenfalls zwei Abschnitte, die sich zwischen den Abschnitten des zweiten Druckbereichs entlang der Seitenkanten der Glasscheibe erstrecken.

In einer weiteren besonders bevorzugten Ausgestaltung umfasst der zweite Druckbereich vier Abschnitte, wobei jeder Abschnitt in einer Ecke des Biegewerkzeugs angeordnet ist. Die Abschnitte sind dazu geeignet, jede Ecke der zu biegenden Glasscheibe mit einer Biegung zu versehen, welche bevorzugt stärker ist als die Biegung der restlichen Glasscheibe. Hierbei wird davon ausgegangen, dass es sich um eine im Wesentlichen viereckige Glasscheibe handelt, wie es im Verglasungsbereich üblich ist. Der erste Druckbereich umfasst dabei bevorzugt ebenfalls vier Abschnitte, die sich zwischen den Abschnitten des zweiten Druckbereichs entlang der Seitenkanten der Glasscheibe erstrecken.

Die Biegung muss in verschiedenen Abschnitten des zweiten Druckbereichs nicht gleichartig ausgestaltet sein. Typischerweise ist für die unteren Ecken der Glasscheibe eine andere Biegung erwünscht als für die oberen Ecken der Glasscheibe. Dies kann durch die Form der Kontaktfläche realisiert werden.

Das erfindungsgemäße Biegewerkzeug ist bevorzugt mit einem Ansaugrohr versehen, mit dem die Saugwirkung erzeugt werden kann. Das Ansaugrohr ist bevorzugt auf der der Kontaktfläche abgewandten Seite des Biegewerkzeugs angeordnet. Der erste Druckbereich und der zweite Druckbereich sind mit dem Ansaugrohr verbunden, so dass Luft aus dem ersten und dem zweiten Druckbereich abgesaugt wird, wodurch der erste Druck p₁ und der zweite Druck p₂ erzeugt werden. Die unterschiedlichen Drücke p₁ und p₂ können durch eine geeignete Gestaltung des Biegewerkzeugs erreicht werden, insbesondere durch die geeignete Gestaltung der Leitungsquerschnitte, so dass die Saugwirkung des gemeinsamen Ansaugrohres geeignet auf den ersten Druckbereich und den zweiten Druckbereich aufgeteilt wird.

Auch wenn dies technisch deutlich aufwendiger ist, können der erste Druckbereich und der zweite Druckbereich aber auch über jeweils ein eigenes Ansaugrohr zur Erzeugung des ersten beziehungsweise des zweiten Druckes verfügen.

Das erfindungsgemäße Biegewerkzeug ist weiter dazu geeignet, in mindestens einem dritten Druckbereich einen dritten Druck p₃ zu erzeugen. Der dritte Druck p₃ ist erfindungsgemäß größer als der erste Druck p₁ (das heißt der Unterdruck ist im dritten Druckbereich weniger stark als im ersten Druckbereich), so dass die durch den Druck p₃ erzeugte Saugwirkung geringer ist als die durch den Druck p₁ erzeugte Saugwirkung. Der dritte Druck p₃ kann dem Umgebungsdruck entsprechen, so dass kein Unterdruck und damit keine Saugwirkung im dritten Druckbereich vorliegt. Durch den dritten Druckbereich können unerwünschte Überbiegungen, die sich durch eine starke Biegung des zweiten Druckbereich auf weitere Bereiche der Scheibe ausbreiten würden, wirksam kompensiert und verringert werden. Durch den separaten dritten Druckbereich mit dem geringen Druck p₃ können also Bereiche mit geringer Biegung in einer Scheibe erzeugt werden, welche in anderen Bereichen eine sehr starke Biegung aufweist. Der dritte Druck p₃ kann auch als Kompensationsdruck bezeichnet werden.

In einer bevorzugten Ausgestaltung ist der dritte Druckbereich in einem zentralen Bereich des Biegewerkzeugs innerhalb der Kontaktfläche angeordnet ist. Das bedeutet, dass der dritte Druckbereich von der rahmenartigen Kontaktfläche umgeben wird. Der dritte Druckbereich ist dazu geeignet, einen zentralen Bereich der zu biegenden Glasscheibe mit einer geringeren Biegung zu versehen als einen oder mehrere Randbereiche der Glasscheibe. Die Randbereiche der Glasscheibe können durch den zweiten Druckbereich mit einer starken Biegung versehen werden, welche an sich zu einem unerwünschten Überbiegen in der Scheibenmitte führen würde. Durch den erfindungsgemäßen dritten Druckbereich kann die Biegewirkung in der Scheibenmitte vorteilhaft unabhängig vom zweiten Druckbereich beeinflusst werden. Durch den höheren Druck im dritten Druckbereich ist die Saugwirkung weniger stark ausgeprägt und die Scheibenmitte wird weniger stark gebogen.

In einer vorteilhaften Ausgestaltung ist das Biegewerkzeug mit mindestens einem Belüftungsrohr versehen, welches einen vollständigen oder teilweisen Druckausgleich zwischen der Umgebung und dem dritten Druckbereich ermöglicht. Durch das Belüftungsrohr strömt Luft von außen nach. Der dritte Druck p₃ kann so gegenüber dem ersten Druck p₁ und dem zweiten Druck p₂ erhöht werden.

Das Belüftungsrohr ist in einer bevorzugten Ausgestaltung mit einem Ventil zur Regulierung des Durchflusses versehen ist. Dadurch kann der dritte Druck p₃ aktiv reguliert werden.

Der dritte Druckbereich kann mit dem vorstehend beschriebenen gemeinsamen Ansaugrohr für den ersten und zweiten Druckbereich verbunden sein, wobei der höhere dritte Druck p₃ durch die geeignete Gestaltung der Leitungsquerschnitte und/oder mindestens ein Belüftungsrohr erreicht wird. Der dritte Druckbereich kann alternativ auch über ein eigenes Ansaugrohr verfügen.

Das Biegewerkzeug kann weitere Druckbereiche mit anderen Werten für den Druck umfassen. Beispielsweise kann neben dem zweiten Druckbereich noch mindestens ein weiterer Druckbereich mit verstärkter Saugwirkung vorgesehen sein.

Die Aufgabe der Erfindung wird weiter gelöst durch ein Verfahren zum Biegen mindestens einer Glasscheibe mit einem erfindungsgemäßen Biegewerkzeug. Das erfindungsgemäße Verfahren umfasst mindestens die folgenden Verfahrensschritte:
- Die Glasscheibe wird auf Biegetemperatur erwärmt. Unter Biegetemperatur wird dabei eine Temperatur verstanden, bei der die Glasscheibe ausreichend erweicht ist, um verformt werden zu können. Typische Biegetemperaturen betragen von 500 °C bis 700 °C, bevorzugt von 550 °C bis 650 °C.
- Die Glasscheibe wird mit der Kontaktfläche in Kontakt gebracht, so dass die Kante der Glasscheibe zumindest abschnittsweise von einem durch den ersten verminderten Druck p₁ erzeugten Luftstrom bestrichen wird. Die Kante der Glasscheibe ist dazu bevorzugt zumindest abschnittsweise im ersten Druckbereich angeordnet.
- Der zweite Druck p₂ wird im zweiten Druckbereich erzeugt und der dritte Druck p₃ wird im dritten Druckbereich erzeugt, wobei die Glasscheibe gebogen wird.

Die Reihenfolge der genannten Verfahrensschritte ist grundsätzlich nicht festgelegt. Beispielsweise kann die Glasscheibe prinzipiell zunächst mit der Kontaktfläche des Biegewerkzeugs in Kontakt gebracht und durch Einwirkung des ersten Druckes gehalten werden, die Glasscheibe anschließend auf Biegetemperatur erwärmt werden und danach durch Einwirkung des zweiten und dritten Drucks gebogen werden.

Ist das Biegewerkzeug mit einem einzelnen Ansaugrohr versehen, wobei die unterschiedlichen Druckbereiche durch geeignete Leitungsquerschnitte innerhalb des Biegewerkzeugs erzeugt werden (die Gesamtsaugwirkung des Ansaugrohrs sich also durch die Gestaltung des Biegewerkzeugs geeignet auf die Druckbereiche aufteilt), so werden die unterschiedlichen Drücke bei der Kontaktierung des Biegewerkzeugs mit der zu biegenden Scheibe ungefähr zeitgleich erzeugt. Der erste Druck bleibt während der Wirkung des zweiten und dritten Druckes angelegt, so dass die Glasscheibe während des gesamten Biegeprozesses sicher am Biegewerkzeug gehalten wird. Der erste Druck wird bevorzugt erst dann abgestellt, wenn die Glasscheibe vom Biegewerkzeug getrennt werden soll.

In einer vorteilhaften Ausführung wird das Verfahren simultan auf mindestens zwei, bevorzugt zwei aufeinander liegende Glasscheiben angewandt. Die Glasscheiben werden dabei paarweise (das heißt als Scheibenpärchen) simultan gebogen. Die Biegung der beiden Glasscheiben ist dann besonders kongruent und aufeinander abgestimmt, so dass die Scheiben sich besonders eignen, miteinander zu einem Verbundglas hoher optischer Qualität laminiert zu werden.

In einer vorteilhaften Ausführung wird das erfindungsgemäße Biegewerkzeug als eine obere Biegeform verwendet. Durch den die Kante der Glasscheibe bestreichenden Luftstrom im ersten Druckbereich, der durch den ersten, verminderten Druck erzeugt wird, kann die die Glasscheibe zuverlässig entgegen der Wirkung der Schwerkraft am Biegewerkzeug gehalten werden. Der erste Druckbereich eignet sich auch, um mehrere aufeinanderliegende Glasscheiben simultan zu halten.

Der erste Druck p₁ entspricht in einer bevorzugten Ausführung bezogen auf den Umgebungsdruck einem Unterdruck von 1 mbar bis 20 mbar, besonders bevorzugt von 2 mbar bis 10 mbar, ganz besonders bevorzugt von 3 mbar bis 6 mbar. Wird der Umgebungsdruck näherungsweise als 1 bar angenommen (Standardbedingungen), so beträgt der erste Druck p₁ damit bevorzugt von 980 mbar bis 999 mbar, besonders bevorzugt von 990 mbar bis 998 mbar, ganz besonders bevorzugt von 994 mbar bis 997 mbar. Damit wird eine ausreichende Saugwirkung entlang der Scheibenkanten erzielt, so dass das Biegewerkzeug als obere Biegeform verwendet werden kann. Glasscheiben, auch mehrere Glasscheiben simultan, können vorteilhaft am Biegewerkzeug angesaugt und gehalten werden.

Der zweite Druck p₂ entspricht in einer bevorzugten Ausführung bezogen auf den Umgebungsdruck einem Unterdruck von 10 mbar bis 100 mbar, besonders bevorzugt von 20 mbar bis 80 mbar, ganz besonders bevorzugt von 30 mbar bis 60 mbar. Wird der Umgebungsdruck näherungsweise als 1 bar angenommen (Standardbedingungen), so beträgt der zweite Druck p₂ damit bevorzugt von 900 mbar bis 990 mbar, besonders bevorzugt von 920 mbar bis 980 mbar, ganz besonders bevorzugt von 940 mbar bis 970 mbar. Damit können ausgeprägte Biegungen, insbesondere an den Scheibenecken erreicht werden.

Der dritte Druck p₃ entspricht in einer bevorzugten Ausführung bezogen auf den Umgebungsdruck einem Unterdruck von 0 mbar bis 5 mbar, besonders bevorzugt von 0 mbar bis 2 mbar, ganz besonders bevorzugt von 0 mbar bis 1 mbar. Es liegt also bezogen auf den Umgebungsdruck ein Unterdruck von höchstens 5 mbar, besonders bevorzugt höchstens 2 mbar, ganz besonders bevorzugt höchstens 1 mbar vor. Damit kann ein Überbiegen aufgrund der starken Biegungen im zweiten Druckbereich wirksam vermieden werden. Wird der Umgebungsdruck näherungsweise als 1 bar angenommen (Standardbedingungen), so beträgt der dritte Druck p₃ damit bevorzugt mindestens 995 mbar, besonders bevorzugt mindestens 998 mbar, ganz besonders bevorzugt mindestens 999 mbar. In einer vorteilhaften Ausgestaltung entspricht der dritte Druck p₃ dem Umgebungsdruck.

In einer vorteilhaften Ausführung des Verfahrens wird die Glasscheibe zunächst auf Biegetemperatur erwärmt. Dies erfolgt bevorzugt in einer unteren Form, auf welche die Scheibe aufgelegt ist. Die untere Form ist bevorzugt eine konkave, zum erfindungsgemäßen Biegewerkzeug komplementäre Form. Die untere Form eignet sich insbesondere zum Schwerkraftbiegen. Durch das Erwärmen auf Biegetemperatur wird die Glasscheibe erweicht und schmiegt sich unter Wirkung der Schwerkraft an die untere Biegeform an. Die Glasscheibe oder Glasscheiben werden in dieser vorteilhaften Ausführung also mittels Schwerkraftbiegen vorgebogen, bevor sie mit dem erfindungsgemäßen Biegewerkzeug weiter gebogen wird.

Nach dem Vorbiegen durch Schwerkraftbiegen wird bevorzugt das erfindungsgemäße Biegewerkzeug von oben an die Glasscheibe oder Glasscheiben in der unteren Biegeform angenähert. Das erfindungsgemäße Biegewerkzeug wirkt also als obere Biegeform. Die Glasscheibe (oder die Glasscheiben) wird durch die Saugwirkung vom erfindungsgemäßen Biegewerkzeug übernommen und an diesem gehalten. Die Annäherung kann durch eine Aufwärtsbewegung der unteren Biegeform und/oder durch eine Abwärtsbewegung des erfindungsgemäßen Biegewerkzeugs erfolgen. Nach der Übergabe der Glasscheibe(n) wird die Glasscheibe mit dem erfindungsgemäßen Biegewerkzeug Form gebogen.

Die durch das Biegen mit dem erfindungsgemäßen Werkzeug erzeugte Form der Glasscheibe kann deren endgültige Form sein. In einer vorteilhaften Ausführung wird durch das erfindungsgemäße Biegewerkzeug eine Vorbiegung erzeugt, während die endgültige Form der Glasscheibe in mindestens einem anschließenden Biegeschritt erzeugt wird. Dadurch können noch komplexere Scheibenformen erzeugt werden.

Das anschließende Biegen in die endgültige Scheibenform kann beispielsweise durch Schwerkraftbiegen erfolgen. Die Glasscheibe wird dazu vom erfindungsgemäßen Biegewerkzeug durch Ausschalten des ersten Drucks p₁ in eine untere, zum Schwerkraftbiegen geeignete Biegeform übergeben.

Das anschließende Biegen in die endgültige Scheibenform kann auch beispielsweise durch Pressbiegen erfolgen, bevorzugt zwischen dem erfindungsgemäßen, oberen Biegewerkzeug und einem unteren Biegewerkzeug. Die Verformung der Glasscheibe erfolgt dabei durch Druck- und/oder Saugwirkung der beiden komplementären Biegewerkzeuge.

Das Abkühlen der Glasscheibe(n) nach dem Biegen kann am erfindungsgemäßen Biegewerkzeug erfolgen. Die Glasscheibe wird aber bevorzugt zum Abkühlen auf eine untere Form übergeben. Die untere Form kann eine eigens dafür vorgesehene Halteform zum Abkühlen sein. Die untere Form kann aber auch beispielsweise die Form für einen Schwerkraftbiegeschritt sein, falls ein solcher vorgesehen ist.

Der besondere Vorteil des erfindungsgemäßen Biegewerkzeugs ist es, dass Scheiben mit einer sehr starken lokalen Biegung erzeugt werden können, während andere Bereiche der Scheibe nur eine geringe Biegung aufweisen. Die Bereiche mit starker Biegung werden insbesondere im zweiten Druckbereich erzeugt (bevorzugt in den Ecken der Scheibe), während die Bereiche mit geringer Biegung durch den dritten Druckbereich erzeugt werden (bevorzugt in der Scheibenmitte). Eine erfindungsgemäß gebogene Scheibe kann beispielsweise
- im zweiten Druckbereich mit einem Biegeradius von höchstens 500 mm, bevorzugt von 50 mm bis 300 mm versehen werden und
- im dritten Druckbereich mit einem Biegeradius von mindestens 1000 mm, bevorzugt von 2000 mm bis 20000 mm versehen werden.
Der Biegeradius im ersten Druckbereich beträgt beispielsweise höchstens 5000 mm, bevorzugt von 1000 mm bis 2000 mm.

Die Glasscheibe oder die Glasscheiben enthalten bevorzugt Kalk-Natronglas, können aber alternativ auch andere Glassorten wie Borsilikatglas oder Quarzglas enthalten. Die Dicke der Glasscheiben beträgt typischerweise 0,5 mm bis 10 mm, bevorzugt 1 mm bis 5 mm.

Werden zwei oder mehrere Glasscheiben simultan gebogen, so ist zwischen den Scheiben bevorzugt ein Trennmittel angeordnet, so dass die Scheiben nicht dauerhaft aneinander haften.

Das erfindungsgemäße Biegewerkzeug wird bevorzugt zum Biegen von Glasscheiben im Fahrzeugbereich verwendet. Das Verfahren eignet sich insbesondere zum paarweisen Biegen von Glasscheiben, welche als Bestandteile eines Verbundglases vorgesehen sind. Ein solches Verbundglas ist bevorzugt eine Windschutzscheibe, kann aber auch eine Dachscheibe, Seitenscheibe oder Heckscheibe sein.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch ein gattungsgemäßes Biegewerkzeug nach dem Stand der Technik,
- Fig. 2: eine Draufsicht auf eine Ausgestaltung des erfindungsgemäßen Biegewerkzeugs,
- Fig. 3: einen Querschnitt entlang A-A' durch das Biegewerkzeug nach Figur 2,
- Fig. 4: einen Querschnitt entlang B-B' durch das Biegewerkzeug nach Figur 2,
- Fig. 5: eine schrittweise Darstellung einer Ausführungsform des erfindungsgemäßen Verfahrens und
- Fig. 6: ein Flussdiagramm einer Ausführungsform des erfindungsgemäßen Verfahrens.

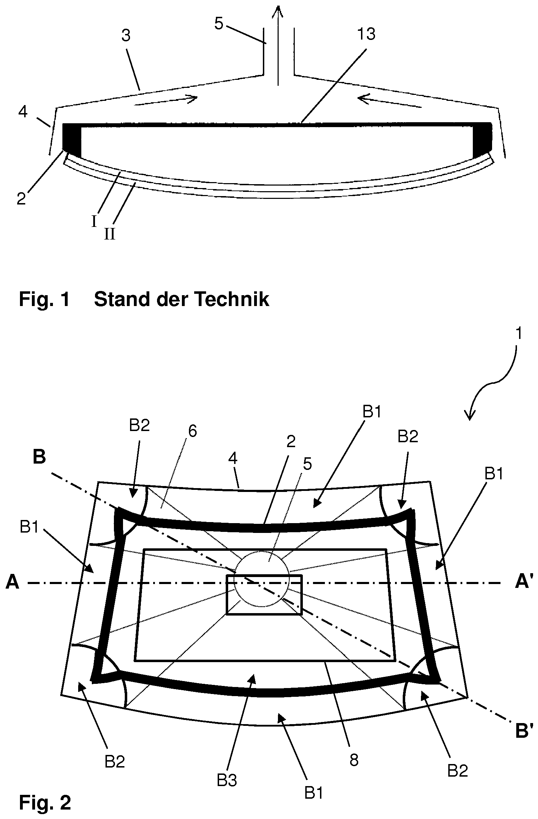

Figur 1 zeigt ein Werkzeug für Glasbiegeprozesse nach dem Stand der Technik. Das Werkzeug ist eine obere Form, welche geeignet ist, eine zwei aufeinander liegende Glasscheiben I, II durch eine Saugwirkung gegen den Einfluss der Schwerkraft an einer rahmenartigen, konvexen Kontaktfläche 2 zu halten. Die Kontaktfläche 2 ist auf einem sogenannten Biegeskelett 13 angeordnet. Zur Erzeugung der Saugwirkung umfasst das Werkzeug ein Ansaugrohr 5, über das Luft abgesaugt wird. Das Werkzeug verfügt weiter über eine Abdeckung 3, deren Ende mit einem umlaufenden Luftleitblech 4 ausgestattet ist. Das Luftleitblech 4 umgibt die Kontaktfläche 2 umlaufend. Durch das Biegeskelett 13 und die Abdeckung 3 mit dem Luftleitblech 4 wird der durch das Ansaugrohr erzeugte Luftstrom so geleitet, dass er die Kanten der Glasscheiben bestreicht. Dadurch wird das Glasscheibenpaar I, II sicher an der Kontaktfläche 2 gehalten.

Die Scheiben I, II sind vorgebogen, beispielsweise durch Schwerkraftbiegen in einer unteren Biegeform. Das dargestellte Werkzeug kann beispielsweise verwendet werden, um das Glasscheibenpaar I, II aus der unteren Form aufzunehmen und an eine andere Form zu übergeben. Beispielsweise kann das Glasscheibenpaar I, II einem Pressbiege-Prozess unterzogen werden, wobei es zwischen dem dargestellten Werkzeug und einer Gegenform unter Einwirkung von Druck- und/oder Saugwirkung verformt wird.

Das dargestellte Werkzeug und Biegeverfahren, bei denen es eingesetzt werden kann, sind aus WO 2006/072721 A1, WO 2012/080071 A1 und WO 2012/080072 A1 bekannt.

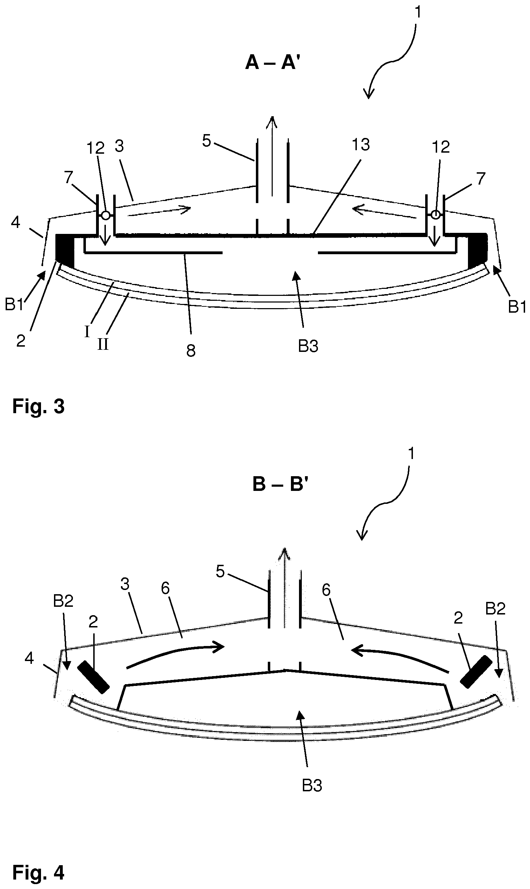

Figur 2, Figur 3 und Figur 4 zeigen je ein Detail eines erfindungsgemäßen, verbesserten Biegewerkzeugs 1. Das Biegewerkzeug 1 ist wie das Werkzeug in Figur 1 eine obere Form für einen Biegeprozess. Figur 2 zeigt eine Draufsicht auf die untere, zur Kontaktierung mit der zu biegenden Glasscheibe vorgesehene Seite des Biegewerkzeugs 1, während die Figuren 3 und 4 jeweils einen Querschnitt zeigen.

Das Biegewerkzeug 1 weist wie das Werkzeug der Figur 1 ein Ansaugrohr 5 auf zur Erzeugung einer Saugwirkung auf, sowie eine Abdeckung 3 mit einem Luftleitblech 4 und ein Biegeskelett 13 mit einer rahmenartigen Kontaktfläche 2. Im Unterschied zum bekannten Werkzeug wird die Saugwirkung im Biegewerkzeug gezielt aufgeteilt, wodurch eine optimierte Druckverteilung erzeugt wird. Dies ermöglicht es, komplexere Scheibenformen zu realisieren. Die Glasscheiben können mit dem erfindungsgemäßen Biegewerkzeug 1 beispielsweise mit einer Vorbiegung versehen werden und in einem anschließenden Biegeschritt, etwas durch Pressbiegen oder Schwerkraftbiegen, in ihre endgültige Form gebracht werden. Das Vorbiegen mit dem erfindungsgemäßen Biegewerkzeug 1 ermöglicht eine komplexere, endgültige Scheibenform.

Das Biegewerkzeug weist drei verschiedene Druckbereiche B1, B2 und B3 auf, in denen unterschiedliche Drücke erzeugt werden können, welche auf die Glasscheiben I, II wirken. Der zweite Druckbereich B2 verfügt über vier Abschnitte, wobei jeder Abschnitt in einer Ecke des Biegewerkzeugs 1 angeordnet ist. Eine Ecke des Biegewerkzeugs 1 ist dabei der Bereich, der dafür vorgesehen ist, auf eine Ecke der zu biegenden Glasscheibe I, II zu wirken. Der erste Druckbereich B1 verfügt ebenfalls über vier Abschnitte, wobei jeder Abschnitt entlang einer Seitenkante des Biegewerkzeugs 1 zwischen Luftleitblech 4 und Kontaktfläche 2 angeordnet ist und zwischen zwei benachbarten Abschnitten des zweiten Druckbereichs B2 verläuft. Eine Seitenkante des Biegewerkzeugs 1 ist dabei der Bereich, der dafür vorgesehen ist, auf eine Seitenkante der zu biegenden Glasscheibe I, II zu wirken. Der dritte Druckbereich B3 ist in dem zentralen, von der Kontaktfläche 2 umgebenden Bereich des Biegewerkzeugs 1 angeordnet.

Das Biegewerkzeug 1 ist geeignet, im ersten Druckbereich B1 einen ersten, verminderten Druck p₁ zu erzeugen. Der Druck p₁ führt zu einem aufwärts gerichteten Luftstrom zwischen Luftleitblech 4 und Kontaktfläche 2. Sind eine oder mehrere Glasscheiben I, II erfindungsgemäß im Kontakt mit dem Biegewerkzeug 1, so werden die Seitenkanten der Glasscheiben durch den Luftstrom bestrichen. Der Luftstrom ist dazu geeignet, eine oder auch mehrere aufeinanderliegende Glasscheiben entgegen der Wirkung der Schwerkraft an der Kontaktfläche des Biegewerkzeugs 1 zu halten. Der erste Druck p₁ im ersten Druckbereich B1 erfüllt also die Funktion des Luftstroms im Werkzeug nach dem Stand der Technik gemäß Figur 1. Um ein Glasscheibenpaar I, II mit einer typischen Scheibendicke von jeweils etwa 2,1 mm zu halten, eignet sich beispielweise ein erster Druck p₁, der bezogen auf den Umgebungsdruck einem Unterdruck von 3 mbar bis 6 mbar entspricht.

Das Biegewerkzeug 1 ist weiter geeignet, im zweiten Druckbereich B2 einen zweiten, verminderten Druck p₂ zu erzeugen, welcher geringer ist als der erste Druck p₁. Die Saugwirkung im zweiten Druckbereich B2 ist demnach stärker als im ersten Druckbereich B1. Während die Glasscheiben durch den Luftstrom im ersten Druckbereich B1 nur gehalten werden sollen, soll im zweiten Druckbereich B2 durch den Luftstrom eine aktive Verformung der Scheibe erreicht werden. Die Kontaktfläche 2 im zweiten Druckbereich B2 ist gegenüber derjenigen im ersten Druckbereich B1 zurückgesetzt, so dass die Glasscheiben vor dem Biegevorgang nicht in Kontakt mit der Kontaktfläche 2 stehen. Durch die Saugwirkung im zweiten Druckbereich B2 werden die erweichten Glasscheiben I, II gebogen und schmiegen sich an die Kontaktfläche 2. Die Abschnitte des zweiten Druckbereichs B2 sind in den Ecken des Biegewerkzeugs 1 angeordnet. Durch die starke Saugwirkung im zweiten Druckbereich B2 können die Ecken der Glasscheiben I, II mit einer Biegung versehen werden, welche stärker ist als die Biegung der übrigen Scheibe. So lassen sich sehr komplexe Scheibenformen realisieren. Die durch den Biegevorgang bewirkte Form der Scheibenecken, welche typischerweise für die unteren Ecken und die oberen Ecken unterschiedlich ist, wird durch die Kontaktfläche 2 bestimmt. Um ein Glasscheibenpaar I, II mit einer typischen Scheibendicke von jeweils etwa 2,1 mm zu biegen, eignet sich beispielweise ein zweiter Druck p₂, der bezogen auf den Umgebungsdruck einem Unterdruck von 30 mbar bis 60 mbar entspricht.

Das Biegewerkzeug 1 ist weiter geeignet, im dritten Druckbereich B3 einen dritten Druck p₃ zu erzeugen, welcher größer ist als der erste Druck p₁. Die Saugwirkung ist im dritten Druckbereich B3 also geringer als im ersten Druckbereich B1 und im zweiten Druckbereich B2. Der dritte Druckbereich B3 verhindert wirksam ein Überbiegen im zentralen Bereich der Glasscheiben I, II aufgrund der starken Biegung im zweiten Druckbereich B2. Mit dem Begriff "Überbiegen" wird das Erzeugen einer unerwünschten Gegenbiegung infolge einer starken Biegung in einem benachbarten Bereich bezeichnet. Der dritte Druckbereich B3 verhindert wirksam das Überbiegen und andere Biegefehler, wie beispielsweise Unebenheiten im zentralen Bereich der Glasscheiben I, II. Ein typischer dritter Druck p₃ entspricht beispielsweise etwa dem Umgebungsdruck oder liegt nur leicht darunter mit einem Unterdruck von beispielsweise 1 mbar.

Ein Unterdruck im Ansaugrohr 5, der geeignet ist, auf die Druckbereiche wie vorstehend beschrieben aufgeteilt zu werden, beträgt beispielsweise etwa 80 mbar.

Zur Erzeugung der Saugwirkungen weist das Biegewerkzeug 1 ein Ansaugrohr 5 auf. Das Ansaugrohr 5 ist auch der von der Kontaktfläche 2 abgewandten Seite des Biegewerkzeugs 1 angeordnet, also der Oberseite. Die Druckbereiche B1, B2 und B3 sind mit dem Ansaugrohr verbunden, wodurch ein verminderter Druck erzeugt wird. Die Abdeckung 3 und das die Kontaktfläche 2 tragende Biegeskelett 13 bilden eine Leitung zwischen dem ersten Druckbereich B1 und dem Ansaugrohr 5, wie es vom Werkzeug nach dem Stand der Technik gemäß Figur 1 bekannt ist. Im erfindungsgemäßen Biegewerkzeug 1 sind zusätzliche Leitungen 6 ausgebildet, welche die Abschnitte des zweiten Druckbereichs B2 mit dem Ansaugrohr 5 verbinden. Die unterschiedlichen Drücke p₁ und p₂ sind mittels geeignet gewählter Leitungsquerschnitte realisiert. Die abgesaugte Luft ist in den Figuren durch Pfeile gekennzeichnet.

Das Ansaugrohr 5 und die Leitungen 6 sind in der Draufsicht der Figur 2 eigentlich nicht zu erkennen, ihre Position ist aber durch gestrichelte Linien angedeutet.

Der dritte Druckbereich B3 verfügt über eine (in den Figuren nicht dargestellte) Verbindung zum Ansaugrohr 5, wodurch auch im dritten Druckbereich B3 ein verminderter Druck p₃ erzeugt wird. Zur Erhöhung des dritten Drucks p₃ weist das Biegewerkzeug 1 Belüftungsrohre 7 auf. Die Belüftungsrohre 7 verlaufen zwischen dem Biegeskelett 13 und der Abdeckung 3 und verbinden den dritten Druckbereich B3 mit der Umgebung auf der von den Kontaktflächen 2 abgewandten Seite des Biegewerkzeugs. Der dritte Druck p₃ ergibt sich durch die Saugwirkung des Ansaugrohres 5 und die durch die Belüftungsrohre 7 nachströmende Luft. Zur aktiven Regulierung des dritten Drucks p₃ sind die Belüftungsrohre 7 mit Ventilen 12 versehen. Die nachströmende Luft ist in den Figuren durch Pfeile gekennzeichnet.

Das Biegeskelett 13 ist mit einem Umleitblech 8 versehen, welches über eine zentrale Öffnung verfügt. Das Umleitblech 8 lenkt die durch die Belüftungsrohre 7 nachströmende Luft um, so dass sie etwa mittig in den dritten Druckbereich B3 strömt. Dadurch wird eine homogene Ausbreitung erreicht, was für die Oberfläche der Glasscheibe vorteilhaft ist. Ein mittig angebrachtes, zentrales Belüftungsrohr ist in der dargestellten Ausgestaltung nicht möglich, da der dafür notwendige Platz durch das zentrale Ansaugrohr 5 belegt ist.

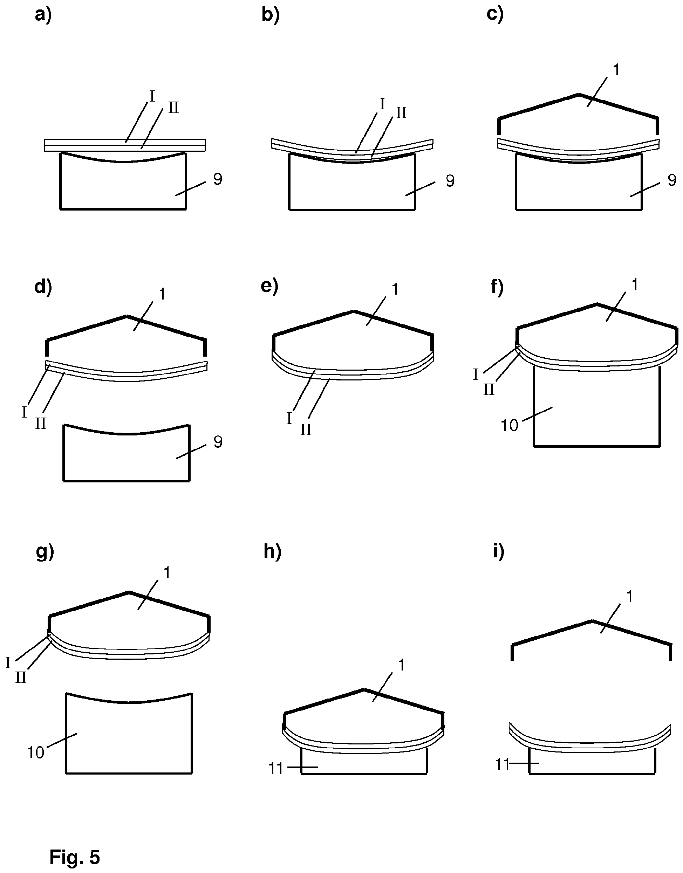

Figur 5 zeigt Schritte einer beispielshaften Ausführungsform des erfindungsgemäßen Verfahrens. Zunächst werden zwei aufeinander liegende Glasscheiben I, II, welche im Ausgangszustand plan sind, auf einer untere Biegeform 9 positioniert (Teil a). Die Scheiben auf der Biegeform 9 werden auf Biegetemperatur, beispielsweise 600 °C, erwärmt und schmiegen sich infolge der Schwerkraft an die Form der unteren Biegeform 9 an (Teil b). Die Glasscheiben I, II werden also mittels Schwerkraftbiegen vorgebogen. Nach dem Schwerkraftbiegen werden die Glasscheiben I, IIvom erfindungsgemäßen Biegewerkzeug 1 übernommen. Dazu wird das Biegewerkzeug 1 von oben an die Glasscheiben I, II auf der unteren Biegeform 9 angenähert und mit der Kontaktfläche 2 in Kontakt gebracht (Teil c). Anschließend wird über das Ansaugrohr 5 die Saugwirkung erzeugt. Aufgrund des ersten Drucks p₁ werden die Glasscheiben I, II am Biegewerkzeug 1 gehalten und können von diesem nach oben bewegt und damit der unteren Biegeform 9 entnommen werden (Teil d). Der zweite Druck p₂ bewirkt die weitere Biegung der Scheibenecken, während der dritte Druck p₃ Biegefehler in der Scheibenmitte verhindert. Durch das Biegewerkzeug 1 wird eine weitere Vorbiegung in eine komplexere Form erreicht (Teil e). Anschließend wird eine untere Saugbiegeform 10 von unten an die Glasscheiben I, II angenähert. Die Glasscheiben I, II werden zwischen dem erfindungsgemäßen Biegewerkzeug 1 und der unteren Saugbiegeform 10 durch Pressbiegen in ihre endgültige Form gebogen (Teil f). Die untere Saugbiegeform 10 wird anschließend wieder abgesenkt (Teil g) und die Glasscheiben I, II werden mittels des Biegewerkzeug 1 auf eine untere Halteform 11 abgelegt und durch Ausschalten der Saugwirkung auf diese Halteform 11 übergeben (Teil h). Das Biegewerkzeug 1 wird dann nach oben bewegt (Teil i) und ist für den Biegeprozess des nächsten Scheibenpaares bereit. Die Glasscheiben I, II kühlen auf der unteren Halteform 11 auf Umgebungstemperatur ab. Als untere Halteform 11 kann auch dieselbe Form oder eine gleich ausgebildete Form verwendet werden wie als erste untere Biegeform 9 (Schwerkraftbiegeform).

Durch das erfindungsgemäße Verfahren können aufgrund der Vorbiegung mit dem erfindungsgemäßen Biegewerkzeug 1 deutlich komplexere Scheibenformen erreicht werden als mit herkömmlichen Verfahren. Das ist der große Vorteil der vorliegenden Erfindung.

Die dargestellten, der Biegung mit dem Biegewerkzeug 1 vorhergehenden und nachfolgenden Verfahrensschritte sind lediglich beispielhaft zu verstehen und schränken die Erfindung in keiner Weise ein. So kann beispielsweise die endgültige Scheibenform mittels Schwerkraftbiegen anstatt Pressbiegen erreicht werden. Auch ist es denkbar, dass die endgültige Scheibenform lediglich mit dem erfindungsgemäßen Biegewerkzeug 1 ohne einen weiteren Biegeschritt erreicht wird.

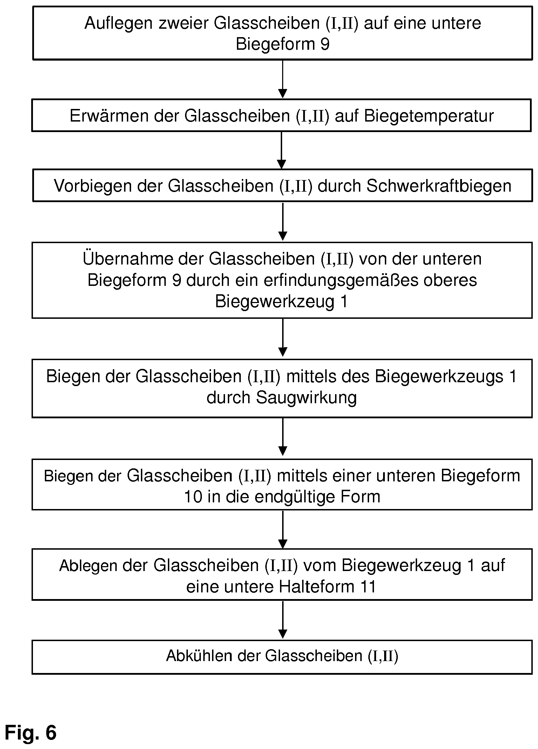

Figur 6 zeigt das Ausführungsbeispiel gemäß Figur 5 anhand eines Flussdiagramms.

### Bezugszeichenliste:

- (1): Biegewerkzeug

- (2): rahmenartige Kontaktfläche
- (3): Abdeckung
- (4): Luftleitblech
- (5): Ansaugrohr
- (6): Leitung zwischen B2 und 5
- (7): Belüftungsrohr
- (8): Umleitblech
- (9): untere Schwerkraftbiegeform
- (10): untere Saugbiegeform
- (11): Halteform
- (12): Ventil von 7
- (13): Biegeskelett

- (B1): erster Druckbereich
- (B2): zweiter Druckbereich
- (B3): dritter Druckbereich

- (p₁): erster, verminderter Druck
- (p₂): zweiter, verminderter Druck
- (p₃): dritter Druck

- (I): Glasscheibe
- (II): Glasscheibe

## Patentansprüche

1. Biegewerkzeug (1) zum Biegen mindestens einer Glasscheibe (I,II) durch eine Saugwirkung, umfassend eine rahmenartige, konvexe Kontaktfläche (2) und eine Abdeckung (3) mit einem peripheren, die Kontaktfläche (2) zumindest bereichsweise umgebenden Luftleitblech (4),
wobei das Biegewerkzeug (1) dazu geeignet ist,
- einen ersten, verminderten Druck (p₁) zu erzeugen in einem ersten Druckbereich (B1) zwischen dem Luftleitblech (4) und der Kontaktfläche (2);
- einen zweiten, verminderten Druck (p₂) zu erzeugen in einem zweiten Druckbereich (B2), wobei der zweite Druck (p₂) kleiner ist als der erste Druck (p₁);
- einen dritten Druck (p₃) zu erzeugen in einem dritten Druckbereich (B3), wobei der dritte Druck (p₃) größer ist als der erste Druck (p₁).

2. Biegewerkzeug (1) nach Anspruch 1, wobei der erste Druckbereich (B1) geeignet ist, die Kante der zu biegenden Glasscheibe (I,II) zumindest abschnittsweise mit einem Luftstrom zu bestreichen und dadurch die Glasscheibe (I,II) an die Kontaktfläche (2) anzudrücken.

3. Biegewerkzeug (1) nach Anspruch 1 oder 2, wobei der zweite Druckbereich (B2) in zumindest einer Ecke des Biegewerkzeugs (1) angeordnet ist und dazu geeignet ist, zumindest eine Ecke der Glasscheibe (I,II) mit einer Biegung zu versehen, welche stärker ist als die Biegung der restlichen Glasscheibe (I,II).

4. Biegewerkzeug (1) nach einem der Ansprüche 1 bis 3, wobei der dritte Druckbereich (B3) in einem zentralen Bereich innerhalb der Kontaktfläche (2) angeordnet ist und dazu geeignet ist, einen zentralen Bereich der Glasscheibe (I,II) mit einer geringeren Biegung zu versehen als den Randbereich der Glasscheibe (I,II).

5. Biegewerkzeug (1) nach einem der Ansprüche 1 bis 4, welches mit einem Ansaugrohr (5) versehen ist, mit dem der erste Druckbereich (B1) und der zweite Druckbereich (B2) verbunden sind und durch das der erste Druck p₁ und der zweite Druck p₂ erzeugt werden.

6. Biegewerkzeug (1) nach einem der Ansprüche 1 bis 5, welches mit mindestens einem Belüftungsrohr (7) versehen ist, welches den dritten Druckbereich (B3) mit der Umgebung verbindet.

7. Biegewerkzeug (1) nach Anspruch 6, wobei das Belüftungsrohr (7) mit einem Ventil (12) zur Regulierung des Durchflusses versehen ist.

8. Verfahren zum Biegen mindestens einer Glasscheibe (I,II) mit einem Biegewerkzeug (1) nach einem der Ansprüche 1 bis 7, wobei
- die Glasscheibe (I,II) auf Biegetemperatur erwärmt wird,
- die Glasscheibe (I,II) mit der Kontaktfläche (2) in Kontakt gebracht wird, so dass die Kante der Glasscheibe (I,II) zumindest abschnittsweise von einem durch den ersten Druck (p₁) erzeugten Luftstrom bestrichen wird, und
- der zweite Druck (p₂) im zweiten Druckbereich (B2) und der dritte Druck (p₃) im dritten Druckbereich (B3) erzeugt werden, wobei die Glasscheibe (I,II) gebogen wird.

9. Verfahren nach Anspruch 8, wobei das Biegewerkzeug (1) als eine obere Biegeform verwendet wird und wobei die Glasscheibe (I,II) durch den die Kante bestreichenden Luftstrom entgegen der Wirkung der Schwerkraft am Biegewerkzeug (1) gehalten wird.

10. Verfahren nach Anspruch 8 oder 9, wobei zwei aufeinander liegende Glasscheiben (I,II) paarweise simultan gebogen werden.

11. Verfahren nach einem der Ansprüche 8 bis 10, wobei der erste Druck (p₁) einem Unterdruck von 1 mbar bis 20 mbar, , der zweite Druck (p₂) einem Unterdruck von 10 mbar bis 100 mbar und der dritte Druck (p₃) einem Unterdruck von 0 mbar bis 5 mbar entspricht und wobei bevorzugt der erste Druck (p₁) einem Unterdruck von 2 mbar bis 10 mbar, der zweite Druck (p₂) einem Unterdruck von 20 mbar bis 80 mbar und der dritte Druck (p₃) einem Unterdruck von 0 mbar bis 2 mbar entspricht.

12. Verfahren nach einem der Ansprüche 8 bis 11, wobei die Glasscheibe (I,II) zuvor mittels Schwerkraftbiegen vorgebogen wird.

13. Verfahren nach einem der Ansprüche 8 bis 12, wobei die Glasscheibe (I,II) anschließend in ihre endgültige Form gebogen wird, bevorzugt mittels Schwerkraftbiegen oder Pressbiegen.

14. Verfahren nach einem der Ansprüche 8 bis 13, wobei die Glasscheibe (I,II)
- im zweiten Druckbereich (B2) mit einem Biegeradius von höchstens 500 mm, bevorzugt von 50 mm bis 300 mm versehen wird und
- im dritten Druckbereich (B3) mit einem Biegeradius von mindestens 1000 mm, bevorzugt von 2000 mm bis 20000 mm versehen wird.

15. Verwendung eines Biegewerkzeugs (1) nach einem der Ansprüche 1 bis 7 zum Biegen von Glasscheiben im Fahrzeugbereich, insbesondere zum paarweisen Biegen von Glasscheiben, welche als Bestandteile eines Verbundglases vorgesehen sind, insbesondere einer Windschutzscheibe.

## Claims

1. Bending tool (1) for bending at least one glass pane (I,II) by means of suction, comprising a frame-like, convex contact surface (2) and a cover (3) having a peripheral air guide plate (4) that surrounds the contact surface (2) at least in regions,
wherein the bending tool (1) is suitable for generating,
- a first, reduced pressure (p₁) in a first pressure region (B1) between the air guide plate (4) and the contact surface (2);
- a second, reduced pressure (p₂) in a second pressure region (B2), wherein the second pressure (p₂) is less than the first pressure (pi);
- a third pressure (p₃) in a third pressure region (B3), wherein the third pressure (p₃) is greater than the first pressure (p₁).

2. Bending tool (1) according to claim 1, wherein the first pressure region (B1) is suitable for sweeping the edge of the glass pane (I,II) to be bent with a stream of air at least in sections and, by this means, to press the glass pane (I,II) against the contact surface (2).

3. Bending tool (1) according to claim 1 or 2, wherein the second pressure region (B2) is arranged in at least one corner of the bending tool (1) and is suitable for providing at least one corner of the glass pane (I,II) with a bend, which is sharper than the bend of the rest of the glass pane (I,II).

4. Bending tool (1) according to one of claims 1 through 3, wherein the third pressure region (B3) is arranged in a central region inside the contact surface (2) and is suitable for providing a central region of the glass pane (I,II) with a lesser bend than the edge region of the glass pane (I,II).

5. Bending tool (1) according to one of claims 1 through 4, which is provided with a suction pipe (5), with which the first pressure region (B1) and the second pressure region (B2) are connected and by means of which the first pressure p₁ and the second pressure p₂ are generated.

6. Bending tool (1) according to one of claims 1 through 5, which is provided with at least one vent pipe (7), which connects the third pressure region (B3) with the surroundings.

7. Bending tool (1) according to claim 6, wherein the vent pipe (7) is provided with a valve (12) for regulating flow.

8. Method for bending at least one glass pane (I,II) with a bending tool (1) according to one of claims 1 through 7, wherein
- the glass pane (I,II) is heated to bending temperature,
- the glass pane (I,II) is brought into contact with the the contact surface (2) such that the edge of the glass pane (I,II) is swept at least in sections by a stream of air generated by the first pressure (p₁), and
- the second pressure (p₂) is generated in the second pressure region (B2) and the third pressure (p₃) is generated in the third pressure region (B3), wherein the glass pane (I,II) is bent.

9. Method according to claim 8, wherein the bending tool (1) is used as an upper bending mold and wherein the glass pane (I,II) is held, against the influence of gravity, against the bending tool (1) by the stream of air sweeping the edge.

10. Method according to claim 8 or 9, wherein two glass panes (I,II) lying one atop the other are simultaneously bent as a pair.

11. Method according to one of claims 8 through 10, wherein the first pressure (p₁) is a vacuum of 1 mbar to 20 mbar, the second pressure (p₂) is a vacuum of 10 mbar to 100 mbar, and the third pressure (p₃) is a vacuum of 0 mbar to 5 mbar and wherein preferably the first pressure (p₁) is a vacuum of 2 mbar to 10 mbar, the second pressure (p₂) is a vacuum of 20 mbar to 80 mbar, and the third pressure (p₃) is a vacuum of 0 mbar to 2 mbar.

12. Method according to one of claims 8 through 11, wherein the glass pane (I,II) is pre-bent beforehand by sag bending.

13. Method according to one of claims 8 through 12, wherein the glass pane (I,II) is subsequently bent into its final shape, preferably by sag bending or press bending.

14. Method according to one of claims 8 through 13, wherein the glass pane (I,II) is provided
- in the second pressure region (B2) with a bend radius of at most 500 mm, preferably of 50 mm to 300 mm, and
- in the third pressure region (B3) with a bend radius of at least 1000 mm, preferably of 2000 mm to 20000 mm.

15. Use of a bending tool (1) according to one of claims 1 through 7 for bending glass panes in the motor vehicle sector, in particular for paired bending of glass panes that are provided as components of a laminated glass, in pa rticular of a windshield.

## Revendications

1. Outil de bombage (1) pour le bombage d'au moins une feuille de verre (I, II) par un effet d'aspiration, comportant une surface de contact convexe (2), en forme de cadre, et un recouvrement (3) ayant une tôle de guidage d'air (4), périphérique, entourant au moins par endroits la surface de contact (2),
l'outil de bombage (1) étant apte à
- produire une première pression (p₁), réduite, dans une première zone de pression (B1) entre la tôle de guidage d'air (4) et la surface de contact (2) ;
- produire une deuxième pression (p₂), réduite, dans une deuxième zone de pression (B2), la deuxième pression (p₂) étant inférieure à la première pression (p₁) ;
- produire une troisième pression (p₃) dans une troisième zone de pression (B3), la troisième pression (p₃) étant supérieure à la première pression (p₁).

2. Outil de bombage (1) selon la revendication 1, dans lequel la première zone de pression (B1) est apte à aspirer la bordure de la feuille de verre à bomber (I, II) au moins par endroits par un flux d'air et ainsi à presser la feuille de verre (I, II) sur la surface de contact (2).

3. Outil de bombage (1) selon l'une des revendications 1 ou 2, dans lequel la deuxième zone de pression (B2) est disposée dans au moins un coin de l'outil de bombage (1) et à cet effet est apte à doter au moins un coin de la feuille de verre (I, II) d'un bombage, lequel est plus fort que le bombage de la feuille de verre (I, II) restante.

4. Outil de bombage (1) selon l'une des revendications 1 à 3, dans lequel la troisième zone de pression (B3) est disposée dans une zone centrale à l'intérieur de la surface de contact (2) et à cet effet est apte à doter une zone centrale de la feuille de verre (I, II) d'un bombage plus faible que la zone de bordure de la feuille de verre (I, II).

5. Outil de bombage (1) selon l'une des revendications 1 à 4, lequel est doté d'un tuyau d'aspiration (5) auquel la première zone de pression (B1) et la deuxième zone de pression (B2) sont reliées et au moyen duquel la première pression (p₁) et la deuxième pression (p₂) sont produites.

6. Outil de bombage (1) selon l'une des revendications 1 à 5, lequel est doté d'au moins un tuyau de ventilation (7), lequel relie la troisième zone de pression (B3) à l'environnement.

7. Outil de bombage (1) selon la revendication 6, dans lequel le tuyau de ventilation (7) est doté d'une soupape (12) pour la régulation du débit.

8. Procédé de bombage d'au moins une feuille de verre (I, II) avec un outil de bombage (1) selon l'une des revendications 1 à 7, dans lequel
- la feuille de verre (I, II) est chauffée à la température de bombage ;
- la feuille de verre (I, II) est amenée en contact avec la surface de contact (2) de telle sorte que la bordure de la feuille de verre (I, II) est aspirée au moins par endroits par un flux d'air produit par la première pression (p₁) ; et
- la deuxième pression (p₂) dans la deuxième zone de pression (B2) et la troisième pression (p₃) dans la troisième zone de pression (B3) sont produites, la feuille de verre (I, II) étant bombée.

9. Procédé selon la revendication 8, dans lequel l'outil de bombage (1) est utilisé en tant que forme de bombage supérieure et dans lequel la feuille de verre (I, II) est maintenue sur l'outil de bombage (1) par le flux d'air aspirant la bordure à l'encontre de l'effet de la gravité.

10. Procédé selon l'une des revendications 8 ou 9, dans lequel deux feuilles de verre (I, II) s'étendant l'une sur l'autre sont bombées simultanément par paire.

11. Procédé selon l'une des revendications 8 à 10, dans lequel la première pression (p₁) correspond à une dépression de 1 mbar à 20 mbar, la deuxième pression (p₂), à une dépression de 10 mbar à 100 mbar, et la troisième pression (p₃), à une dépression de 0 mbar à 5 mbar, et dans lequel, de préférence, la première pression (p₁) correspond à une dépression de 2 mbar à 10 mbar, la deuxième pression (p₂), à une dépression de 20 mbar à 80 mbar, et la troisième pression (p₃), à une dépression de 0 mbar à 2 mbar.

12. Procédé selon l'une des revendications 8 à 11, dans lequel la feuille de verre (I, II) est préalablement prébombée au moyen d'un bombage par gravité.

13. Procédé selon l'une des revendications 8 à 12, dans lequel la feuille de verre (I, II) est bombée ensuite dans sa forme définitive, de préférence au moyen d'un bombage par gravité ou d'un bombage par pressage.

14. Procédé selon l'une des revendications 8 à 13, dans lequel la feuille de verre (I, II)
- dans la deuxième zone de pression (B2) est dotée d'un rayon de bombage d'au plus 500 mm, de préférence de 50 mm à 300 mm ; et
- dans la troisième zone de pression (B3) est dotée d'un rayon de bombage d'au moins 1 000 mm, de préférence de 2 000 mm à 20 000 mm.

15. Utilisation d'un outil de bombage (1) selon l'une des revendications 1 à 7 pour le bombage de feuilles de verre dans le domaine des véhicules, en particulier pour le bombage par paires de feuilles de verre, qui sont prévues en tant qu'éléments d'un vitrage feuilleté, en particulier d'un pare-brise.
